# EUROPÄISCHE PATENTANMELDUNG

(11) **EP 2 775 078 A2**
(43) Veröffentlichungstag der Anmeldung: **10.09.2014**
(21) Anmeldenummer: 14000491.2
(22) Anmeldetag: 12.02.2014
(51) Int. Cl.: E05F 3/12

(54) **Überdruckventil für eine Türschließvorrichtung**

(30) Priorität: 08.03.2013 DE 102013102336
(71) Anmelder: Dorma GmbH & Co. KG, 58256 Ennepetal (DE)
(72) Erfinder: Wildförster, Thomas, D-58332 Schwelm (DE)

(57) **Zusammenfassung**

Die Erfindung betrifft ein Überdruckventil (10) für eine Türschließvorrichtung (100) einer Tür, aufweisend ein Ventilgehäuse (20) mit einem Innenraum (22), der einen Fluideingang (24) und einen Fluidausgang (26) aufweist, wobei der Innenraum (22) zwischen Fluideingang (24) und Fluidausgang (26) eine Gehäusedichtfläche (28) aufweist, weiter aufweisend ein Dichtelement (30) mit einer Elementdichtfläche (38), welche gemeinsam mit der Gehäusedichtfläche (28) einen Dichtsitz ausbildet, wobei das Dichtelement (30) in Richtung der Gehäusedichtfläche (28) mit einer Dichtkraft beaufschlagt ist, wobei der Fluideingang (24) durch ein Filterelement (40) abgedeckt ist, welches zumindest abschnittsweise formschlüssig an dem Ventilgehäuse (20) befestigt ist.

## Beschreibung

Die vorliegende Erfindung betrifft ein Überdruckventil für eine Türschließvorrichtung, eine Türschließvorrichtung mit einem Überdruckventil sowie ein Verfahren zur Herstellung eines Überdruckventils.

Überdruckventile für Türschließvorrichtungen sind grundsätzlich bekannt. So sind solche Türschließvorrichtungen häufig mit hydraulischen Dämpfungsvorrichtungen ausgestattet. Um die Dämpfung zu erzielen, sind Überdruckventile eingebaut, welche eine Beschädigung der einzelnen Türschließerbauteile auch im Überlastfall verhindern. Diese Überdruckventile dienen dazu, einen auftretenden Überdruck im Hydrauliksystem zu begrenzen und z. B. durch ein Öffnen des Überdruckventils zu einem Tankraum hin zu begrenzen. Um die Dichtwirkung im Normalfall herstellen zu können, ist üblicherweise wenigstens ein Dichtelement mit einer Elementdichtfläche gegen eine Gehäusedichtfläche im Innenraum eines Ventilgehäuses gedrückt. Auf diese Weise wird ein Dichtsitz ausgebildet, welcher das Überdruckventil in der geschlossenen Position hält. Im Falle eines Überdrucks wird z. B. gegen eine Federvorrichtung das Dichtelement aus dem Dichtsitz abgehoben, so dass das Überdruckventil öffnet und der Überdruck abgebaut werden kann.

Beim Einsatz in Türschließvorrichtungen wird ein solches Überdruckventil in eine Hydraulikleitung aus Metall oder Kunststoff eingesetzt. Je nach Fertigungsverfahren und Fertigungsgenauigkeit kann zumindest zu Beginn des Einsatzes der Türschließvorrichtung noch Verschmutzung innerhalb des Hydrauliksystems vorliegen. Dies sind insbesondere Schmutzpartikel wie beispielsweise Späne von spanbearbeitender Herstellweise der einzelnen Bauteile der Türschließvorrichtung. Bei bisherigen Türschließvorrichtungen wurden die Überdruckventile ausgebildet, um solchen Spänen zu widerstehen. Befand sich also zumindest ein Schmutzpartikel innerhalb des Überdruckventils z. B. zwischen den beiden Dichtflächen, so führte dies zu Undichtigkeiten, wobei das Material zumindest in diesem Abschnitt besonders hart, insbesondere aus einem harten Metall, ausgebildet wurde. Dies führte dazu, dass eine ausreichende Widerstandsfähigkeit gegeben war, um die Dichtflächen auch bei vorhandenen Schmutzpartikeln nicht zu beschädigen. Eine solche metallische Ausbildung ist jedoch mit hohem Fertigungsaufwand und hohen Kosten verbunden.

Es ist Aufgabe der vorliegenden Erfindung, die voranstehend beschriebenen Nachteile zumindest teilweise zu beheben. Insbesondere ist es Aufgabe der vorliegenden Erfindung, ein Überdruckventil für eine Türschließvorrichtung, eine Türschließvorrichtung mit einer solchen Überdruckvorrichtung sowie ein Verfahren zur Herstellung eines Überdruckventils zur Verfügung zu stellen, welche in kostengünstiger und einfacher Weise die Herstellung eines solchen Ventils, insbesondere aus einem kostengünstigen Material, ermöglichen.

Voranstehende Aufgabe wird gelöst durch ein Überdruckventil mit den Merkmalen des Anspruchs 1, eine Türschließvorrichtung mit den Merkmalen des Anspruchs 10 sowie ein Verfahren mit den Merkmalen des Anspruchs 11. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Überdruckventil beschrieben sind, selbstverständlich im Zusammenhang mit der erfindungsgemäßen Türschließvorrichtung sowie dem erfindungsgemäßen Verfahren und jeweils umgekehrt, so dass bzgl. der Offenbarung zu den einzelnen Erfindungsaspekten stets wechselseitig Bezug genommen wird bzw. werden kann.

Ein erfindungsgemäßes Überdruckventil für eine Türschließvorrichtung einer Tür weist ein Ventilgehäuse mit einem Innenraum auf. Darüber hinaus sind ein Fluideingang und ein Fluidausgang vorgesehen, wobei der Innenraum zwischen Fluideingang und Fluidausgang eine Gehäusedichtfläche aufweist. Darüber hinaus ist ein Dichtelement mit einer Elementdichtfläche vorgesehen, welche gemeinsam mit der Gehäusedichtfläche einen Dichtsitz ausbildet. Das Dichtelement ist in Richtung der Gehäusedichtfläche mit einer Dichtkraft beaufschlagt. Ein erfindungsgemäßes Überdruckventil zeichnet sich dadurch aus, dass der Fluideingang durch ein Filterelement abgedeckt ist, welches zumindest abschnittsweise formschlüssig an dem Ventilgehäuse befestigt ist.

Ein erfindungsgemäßes Überdruckventil dient dazu, besonders kostengünstige und mit geringerer mechanischer Stabilität versehene Materialien, insbesondere für das Ventilgehäuse einsetzen zu können. Dabei handelt es sich insbesondere um Kunststoffmaterialien, welche durch Spritzgussverfahren verarbeitet werden können. Um sicherzustellen, dass auch im Falle eines vorhandenen Schmutzpartikels innerhalb eines Hydrauliksystems die Dichtflächen nicht beschädigt werden, wird über das erfindungsgemäße Filterelement sichergesellt, dass dieser Schmutzpartikel die Dichtsitze bzw. die Dichtflächen nicht erreicht.

Bei einem erfindungsgemäßen Überdruckventil kann das zur Verfügungstellen des Filterelements besonders kostengünstig und einfach erfolgen. So kann die Montage schnell und einfach innerhalb des Spritzgussverfahrens oder in einem einzelnen Schritt anschließend an das Spritzgussverfahren durchgeführt werden. Vorzugsweise sind keine zusätzlichen Bauteile, wie Schrauben, Sicherungsringe oder Splintsicherungen notwendig. Vielmehr erfolgt eine formschlüssige Anbindung des Filterelements an das Ventilgehäuse. Dies verbessert auch die Verlustsicherheit eines Überdruckventils gemäß der vorliegenden Erfindung, so dass auch bei schwierigen Montagesituationen die Wirksamkeit des Filterelements gegeben ist.

Eine formschlüssige Verbindung ist im Sinne der vorliegenden Erfindung eine Befestigung, welche zumindest abschnittsweise ein Umgreifen des Ventilgehäuses am Filterelement mit sich bringt. Die Filterfläche wird dabei selbstverständlich freigelassen, um die beschriebene Filterwirkung zu erzielen. Das Umgreifen in formschlüssiger Weise erfolgt zumindest abschnittsweise, so dass an verschiedenen Abschnitten des Ventilgehäuses der Formschluss in erfindungsgemäßer Weise hergestellt werden kann.

Ein derart ausgebildetes Überdruckventil ist insbesondere aus Kunststoff herstellbar, da das Filterelement vor dem Eindringen von beschädigenden Schmutzpartikeln schützt. Dabei kann der Formschluss direkt in der finalen Position des Filterelements erfolgen, oder aber ein anschließendes Bewegen bzw. Verschwenken des Filterelements gemeinsam mit einem zugehörigen Formschlussabschnitt des Ventilgehäuses das Filterelement in dessen finale Position bringen.

Ein erfindungsgemäßes Überdruckventil lässt sich dahingehend weiterbilden, dass das Ventilgehäuse zumindest im Abschnitt der Gehäusedichtfläche aus Kunststoff, insbesondere aus einem Spritzgusskunststoff ausgebildet ist. Dabei handelt es sich um eine besonders leichte und kostengünstige Variante. Das Herstellen mithilfe eines Spritzgussverfahrens ist eine besonders kostengünstige und einfache Herstellmöglichkeit. Darüber hinaus kann auf diese Weise über den Spritzguss eine ausreichende Abdichtung zwischen dem Filter und dem Ventilgehäuse zur Verfügung gestellt werden. Diese Abdichtfläche zwischen Filter und Ventilgehäuse dient dazu, dass kein Bypass für Schmutzpartikel am Filterelement vorbei vorgegeben wird.

Ebenfalls von Vorteil ist es, wenn bei einem erfindungsgemäßen Überdruckventil ein Formschlussabschnitt des Ventilgehäuses das Filterelement abschnittsweise umgibt, um das Filterelement an dem Ventilgehäuse zu befestigen. Der Formschlussabschnitt kann insbesondere in einem gemeinsamen Schritt mit dem Ventilgehäuse ausgebildet werden. So kann in einer Kavität eines Spritzgusswerkzeugs ein Filterelement aufgenommen werden. In dieser Vorabhalterung wird während des Spritzgussverfahrens durch die Kavität ein formschlüssiges Umspritzen des Filterelements mit dem Formschlussabschnitt und dem Rest des Ventilgehäuses erzeugt. Damit wird gemeinsam mit der Herstellung auch der beschriebene erfindungsgemäße Formschluss erzeugt. Selbstverständlich kann auch in einem zweiten Schritt an ein bestehendes Ventilgehäuse aus Kunststoff ein Filterelement mit einem nun angespritzten Materialring als Formschlussabschnitt ausgestattet werden. Hier ist vorzugsweise eine Materialeinheit zwischen Ventilgehäuse und dem davon abhängigen Formschlussabschnitt gegeben. Das Anspritzen dieses Materialrings erfolgt also in stoffschlüssiger Weise.

Ein weiterer Vorteil kann erzielt werden, wenn bei einem erfindungsgemäßen Überdruckventil die Kontaktflächen zwischen dem Filterelement und dem Ventilgehäuse wenigstens abschnittsweise abgedichtet sind. Diese Abdichtung z. B. über separate Dichtmittel oder ausreichenden Druck auf das Filterelement dient dazu, dass keine Schmutzpartikel seitlich am Filterelement an diesen Kontaktflächen vorbei in das Innere des Überdruckventils gelangen können. Zum Beispiel kann das Filterelement aus flexiblem Material ausgebildet sein, so dass bei der Herstellung des Formschlusses ein ausreichender Druck auf dieses flexible Filterelement im Formschlussabschnitt ausgeübt werden kann. Auf diese Weise wird durch das Zusammendrücken eine ausreichende Dichtkraft an diesen Kontaktflächen zur Verfügung gestellt.

Ein weiterer Vorteil ist es, wenn bei einem erfindungsgemäßen Überdruckventil das Filterelement wenigstens eines der folgenden Materialien aufweist:
- Stoffgewebe
- Metallgewebe
- Sintermaterial
- Fliesmaterial

Bei der voranstehenden Aufzählung handelt es sich um eine nicht abschließende Liste. Hauptmerkmal eines erfindungsgemäßen Filterelements ist eine ausreichende Feinmaschigkeit, um die gewünschte Wirkungsweise auch bei kleinen Verunreinigungen zu erzielen. Insbesondere sollen sich auch feine Schmutzpartikel in dem Filterelement verfangen. Bei der Auslegung des Filterelements ist insbesondere der Druckverlust zu beachten, um die Auslösecharakteristik des Überdruckventils richtig einzustellen. Dafür sind vorzugsweise besonders kurze Filterelemente mit Bezug auf die Dicke und die entsprechende Durchströmungsrichtung vorzusehen. Dies ist von Vorteil, da üblicherweise keine große Filterleistung mit Bezug auf die Menge zu erwarten ist. Vielmehr wird ausschließlich beim Ersteinsatz des Überdruckventils eine entsprechende Absicherung notwendig sein. Die reduzierte Dicke in Durchflussrichtung durch das Filterelement hindurch reduziert dementsprechend den erzeugten Druckverlust, so dass trotz des Einsatzes eines Filterelements die notwendige mechanische Stabilität des Überdruckventils nicht stark zunehmen muss.

Ein weiterer Vorteil kann erzielt werden, wenn bei einem erfindungsgemäßen Überdruckventil der Dichtsitz zwischen Gehäusedichtfläche und Elementdichtfläche ringförmig oder im Wesentlichen ringförmig ausgebildet ist. Damit kann beim Öffnen des Dichtelements ein Ringspalt erzeugt werden. Dies führt zu einer besonders einfachen und platzsparenden Bauweise des Überdruckventils. Aufgrund der Tatsache, dass durch das Filterelement das Einbringen von Schmutzpartikeln oder anderen Verunreinigungen wirksam vermieden wird, kann ein solcher ringförmiger Dichtsitz auch in besonders kleinen Schaltbewegungen wirken.

Ebenfalls von Vorteil kann es sein, wenn bei einem erfindungsgemäßen Überdruckventil zwischen dem Filterelement und dem Dichtelement bei ausgebildetem Dichtsitz ein Spalt ausgebildet ist. Dieser Spalt ist also ein Mindestabstand zwischen dem Filterelement und dem Dichtsitz in Flussrichtung des Fluids.

Ebenfalls vorteilhaft kann es sein, wenn bei einem erfindungsgemäßen Überdruckventil eine Federvorrichtung, insbesondere aufweisend wenigstens ein Federelement, vorgesehen ist, um das Dichtelement mit der Dichtkraft in Richtung der Gehäusedichtfläche zu beaufschlagen. Diese Federvorrichtung weist z. B. eine Spiralfeder auf. Auch andere Federelemente, z. B. aus Elastomermaterial, sind im Rahmen der vorliegenden Erfindung denkbar.

Vorteilhaft ist es darüber hinaus, wenn bei einem erfindungsgemäßen Überdruckventil zwischen einem Formschlussabschnitt und dem Rest des Ventilgehäuses ein Scharnierabschnitt angeordnet ist, um ein Verschwenken des Filterelements zu ermöglichen. Dies vereinfacht die Herstellung eines erfindungsgemäßen Überdruckventils noch weiter. So kann das Ventilgehäuse gemeinsam mit dem formschlüssig befestigten Filterelement insbesondere in einem einzigen Schritt eines Spritzgussverfahrens hergestellt werden. Durch den Scharnierabschnitt kann eine örtliche Separierung des Formschlussabschnitts vom Rest des Ventilgehäuses erfolgen, so dass ohne aufwendige Werkzeugkonstruktion, insbesondere ohne notwendige Schieber innerhalb des Werkzeugs auch der Formschlussabschnitt mit der formschlüssigen Befestigung des Filterelements erzeugt werden kann. Nach diesem einzigen Schritt des Spritzgussverfahrens erfolgt ein Verschwenken des Formschlussabschnitts gemeinsam mit dem Filterelement um den Scharnierabschnitt. Dabei wird die Montage des Filterelements in der gewünschten Positionierung über dem Fluideingang erzeugt. Der Scharnierabschnitt kann z. B. als Materialbrücke in Form eines Filmscharniers ausgebildet sein.

Weiter kann es von Vorteil sein, wenn bei einem erfindungsgemäßen Überdruckventil der Formschlussabschnitt wenigstens ein Rastmittel aufweist, welches ausgebildet ist für ein Einrasten in einem Gegenrastmittel des Ventilgehäuses. Die Rastmittel können insbesondere als Rastnasen ausgebildet sein, so dass die Gegenrastmittel Vertiefungen oder Durchbrüche im Ventilkörper sein können. Insbesondere bei der Kombination mit einem Scharnierabschnitt wird auf diese Weise eine besonders leichte und einfache Motierbarkeit gewährleistet. Nach dem Verschwenken des Filterelements erfolgt das Verrasten, so dass automatisch die gesicherte Position durch das Filterelement eingenommen werden kann. Neben der Einfachheit der Herstellung wird damit auch die Geschwindigkeit der Montage erhöht.

Vorteilhaft ist es weiter, wenn bei einem erfindungsgemäßen Überdruckventil im Ventilgehäuse wenigstens eine Abstützaufnahme für die Aufnahme einer Abstützvorrichtung für eine Abstützung der Dichtkraft angeordnet ist. Eine solche Abstützvorrichtung kann z. B. ein Stift sein, welcher als Widerlager für eine Federvorrichtung dient. Dieser Stift wird nach dem Einbringen der Federvorrichtung in die Abstützaufnahme eingeschoben und/oder eingesetzt, so dass ein Abstützen der Dichtkraft zwischen dem Dichtsitz und diesem Stift erfolgen kann. Durch die Korrelation zwischen der Position der Abstützaufnahme und der Federhärte der Federvorrichtung kann damit die Dichtkraft definiert vorgegeben werden.

Ein weiterer Vorteil ist erzielbar, wenn bei einem erfindungsgemäßen Überdruckventil wenigstens eine Abstützvorrichtung für eine Abstützung der Dichtkraft mit wenigstens einem Rastmittel für ein Einrasten in einem Gegenrastmittel des Ventilkörpers ausgebildet ist, welche Abstützvorrichtung insbesondere über einen Scharnierabschnitt mit dem Rest des Ventilgehäuses verbunden ist. Wie dies bereits mit Bezug zu dem Formschlussabschnitt und den dort angebrachten Rastmitteln beschrieben worden ist, kann auch die Abstützvorrichtung in ähnlicher Weise an dem Ventilkörper befestigt werden. Damit wird auch eine besonders einfache und kostengünstige Montage dieses Bestandteils des Überdruckventils möglich. Auch kann die Abstützvorrichtung hier als Abdeckung oder sogar als Dichtung zum Innenraum des Ventilkörpers hin ausgebildet sein.

Ein weiterer Gegenstand der vorliegenden Erfindung ist eine Türschließvorrichtung für eine Tür, aufweisend eine Hydraulikvorrichtung mit einem Tankraum und einem Druckraum, welche miteinander fluidkommunizierend über eine Fluidleitung verbunden sind. Eine erfindungsgemäße Türschließvorrichtung zeichnet sich dadurch aus, dass in der Fluidleitung zumindest ein Überdruckventil gemäß der vorliegenden Erfindung angeordnet ist. Dementsprechend bringt eine erfindungsgemäße Türschließvorrichtung die gleichen Vorteile mit sich, wie sie ausführlich mit Bezug auf ein erfindungsgemäßes Überdruckventil erläutert worden sind.

Ein weiterer Gegenstand der vorliegenden Erfindung ist ein Verfahren zur Herstellung eines erfindungsgemäßen Überdruckventils, aufweisend die folgenden Schritte:
- Herstellen des Ventilgehäuses,
- zur Verfügung stellen eines Filterelements und
- zumindest abschnittsweises formschlüssiges Verbinden des Filterelements mit dem Ventilgehäuse.

Durch die Herstellung eines erfindungsgemäßen Überdruckventils werden durch das erfindungsgemäße Verfahren die gleichen Vorteile erzielt, wie sie ausführlich mit Bezug auf ein erfindungsgemäßes Überdruckventil erläutert worden sind. Selbstverständlich kann auch als zusätzlicher Schritt nach dem formschlüssigen Verbinden des Filterelements eine Bewegung, insbesondere ein Verschwenken des Filterelements gemeinsam mit einem Formschlussabschnitt erfolgen. Dies ist insbesondere dann der Fall, wenn der Formschlussabschnitt und der Rest des Gehäuses über ein Scharnierabschnitt, insbesondere ein Filmscharnier, miteinander verbunden sind.

Ein erfindungsgemäßes Verfahren lässt sich dahingehend weiterbilden, dass das Herstellen des Ventilgehäuses und der Schritt des formschlüssigen Verbindens des Filterelements mit dem Ventilgehäuse mittels wenigstens eines Spritzgussvorgangs durchgeführt werden. Das können ein Schritt oder auch zwei Schritte beim Spritzgussvorgang sein. Auf diese Weise kann kostengünstig und einfach, insbesondere mit Kunststoffmaterial, ein erfindungsgemäßes Verfahren durchgeführt werden.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig. 1: eine Ausführungsform einer erfindungsgemäßen Türschließvorrichtung,
- Fig. 2: eine Ausführungsform eines erfindungsgemäßen Überdruckventils im schematischem Querschnitt,
- Fig. 3: die weitere Ausführungsform eines erfindungsgemäßen Überdruckventils bei geöffnetem Überdruckventil,
- Fig. 4: eine weitere Ausführungsform eines erfindungsgemäßen Überdruckventils während der Herstellung,
- Fig. 5: die Ausführungsform der Figur 4 in anderer Ansicht,
- Fig. 6: eine weitere Ausführungsform eines erfindungsgemäßen Überdruckventils,
- Fig. 7: die Ausführungsform der Figur 6 in perspektivischer Darstellung vor der Endmontage und
- Fig. 8: eine weitere Ausführungsform eines erfindungsgemäßen Überdruckventils vor der Endmontage.

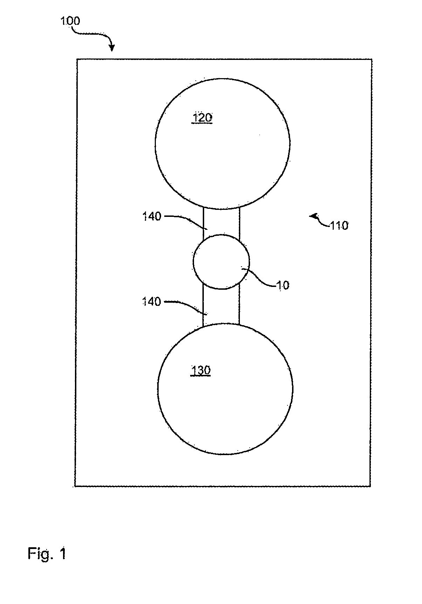

In Figur 1 ist schematisch eine Ausführungsform einer erfindungsgemäßen Türschließvorrichtung 100 dargestellt. Sie weist einen Tankraum 120 und einen Druckraum 130 auf, welche miteinander über eine Fluidleitung 140 in fluidkommunizierender Verbindung stehen. Dieses Gesamtsystem ist eine Hydraulikvorrichtung 110. In der Fluidleitung 140 ist zum Absperren zwischen dem Tankraum 120 und dem Druckraum 130 ein Überdruckventil 10 angeordnet.

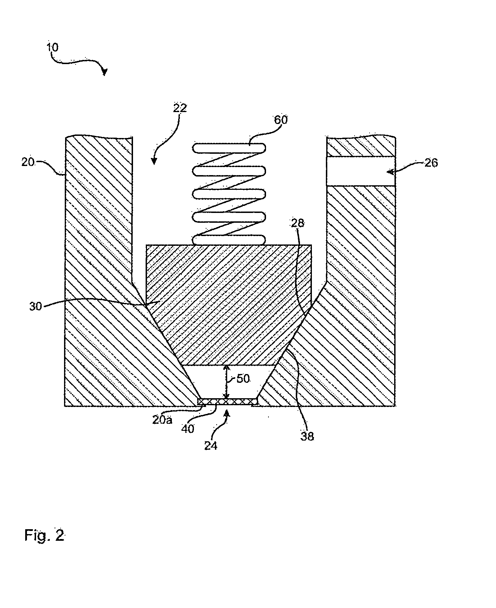

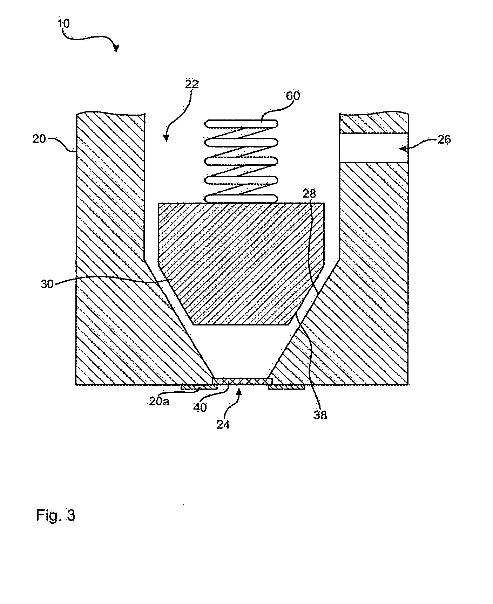

Die Figuren 2 und 3 zeigen mögliche Ausführungsformen eines erfindungsgemäßen Überdruckventils 10. In Figur 2 ist dieses Überdruckventil 10 geschlossen, während in Figur 3 die geöffnete Position des Überdruckventils 10 dargestellt ist.

In der Figur 2 ist der sich ausbildende Dichtsitz zwischen der Elementdichtfläche 38 eines Dichtelements 30 und einer Gehäusedichtfläche 28 eines Ventilgehäuses 20 gut zu erkennen. Dieser Dichtsitz bildet sich im Innenraum 22 des Ventilgehäuses 20 aus. Darüber hinaus sind im Ventilgehäuse 20 ein Fluideingang 24 und ein Fluidausgang 26 vorgesehen.

Um das Dichtelement 30 in der in Figur 2 dargestellten dichtenden Position mit einer ausreichenden Dichtkraft zu beaufschlagen, ist eine Federvorrichtung 60 in Form einer Spiralfeder vorgesehen. Diese Federvorrichtung 60 beaufschlagt das Dichtelement 30 in Figur 2 von oben nach unten mit einer Dichtkraft.

Wie der Figur 2 ebenfalls zu entnehmen ist, ist ein Filterelement 40 vorgesehen, welches formschlüssig durch Umspritzen mit dem Material des Ventilgehäuses 20 verbunden ist. Auf diese Weise deckt das Filterelement 20 den Fluideingang 24 ab. Darüber hinaus ist zu erkennen, dass zumindest abschnittsweise ein Formschlussabschnitt 20a diesen Formschluss zur Befestigung des Filterelements 40 am Ventilgehäuse 20 zur Verfügung stellt.

Ebenfalls der Figur 2 zu entnehmen ist es, dass zwischen dem Dichtelement 30 in der dargestellten Position im Dichtsitz und dem Filterelement 40 ein Spalt 50 vorgesehen ist. In diesem Spalt 50 kann sich ein ausreichender Druck aufbauen, um die Funktionalität der Überdruckfunktion des Überdruckventils 10 auch gewährleisten zu können.

Figur 3 zeigt eine leichte Variation der Ausführungsform der Figur 2. Gleiche bauliche Merkmale sind mit gleichen Bezugszeichen versehen und bringen die gleiche Wirkung mit sich. Im Unterschied zu der Ausführungsform der Figur 2 ist hier ein separater Formschlussabschnitt 20a vorgesehen. Dieser ist aus dem gleichen Material wie der Rest des Ventilgehäuses 20 ausgebildet und in einem zweiten Schritt eines Spritzgussverfahrens angespritzt. So kann in einem ersten Schritt in einem Spritzgussverfahren das Ventilgehäuse 20 hergestellt werden. Anschließend wird das Filterelement 40 in der in Figur 3 gezeigten Position eingesetzt und in einem zweiten Spritzgussverfahrensschritt in ringförmiger Weise der Formschlussabschnitt 20a des Ventilgehäuses 20 erzeugt.

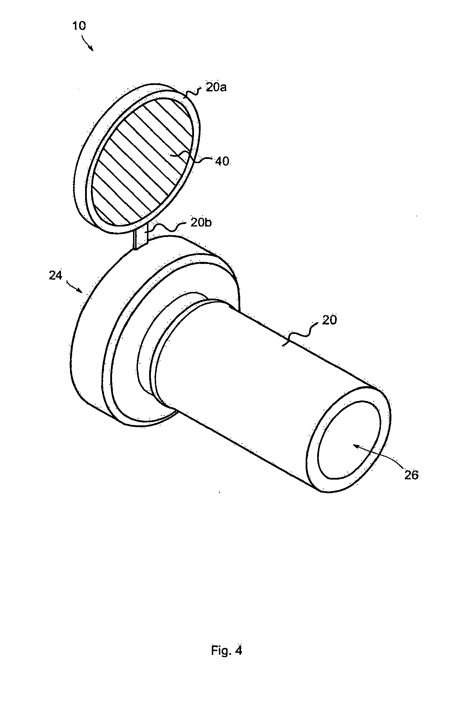

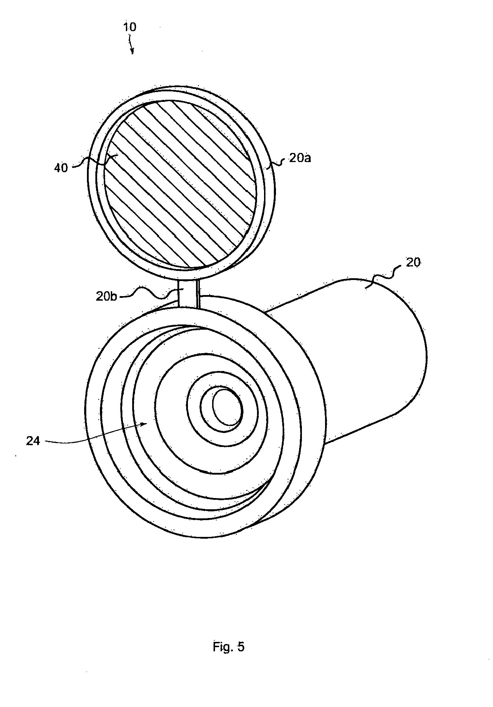

Die Figuren 4 und 5 zeigen eine weitere Ausführungsform eines erfindungsgemäßen Überdruckventils 10. Bei dieser Ausführungsform ist ein Zwischenschritt beim Herstellverfahren gezeigt. So kann mithilfe eines Spritzgussverfahrens aus Kunststoff das Ventilgehäuse 20 mit dem Fluideingang 24 und dem Fluidausgang 26 erzeugt werden. Gleichzeitig wird ein Formschlussabschnitt 20a, welcher über einen Scharnierabschnitt 20b mit dem Rest des Ventilgehäuses 20 verbunden ist, in dem gleichen Spritzgussvorgang hergestellt. Während des Spritzgussvorgangs wird gleichzeitig das Filterelement 40 mit dem Formschlussabschnitt 20a umspritzt. Hierfür wurde das Filterelement 40 in der Kavität in entsprechender Weise vorpositioniert, so dass während des Spritzgussvorgangs ein im Wesentlichen ringförmig umschließendes Ausbilden des Formschlussabschnitts 20a erfolgt.

Die in Figur 4 und 5 dargestellte Situation des Überdruckventils 10 ist als Halbzeug zu verstehen. In einem abschließenden Schritt wird über eine Verschwenkung entlang der Schwenkachse des Scharnierabschnitts 20b das Filterelement 40 nach unten verschwenkt und rastet dementsprechend in den Fluideingang 24 ein. Im Ergebnis kann hier in kostengünstiger und einfacher Weise die Positionierung des Filterelements 40 vor dem Fluideingang 24 erfolgen.

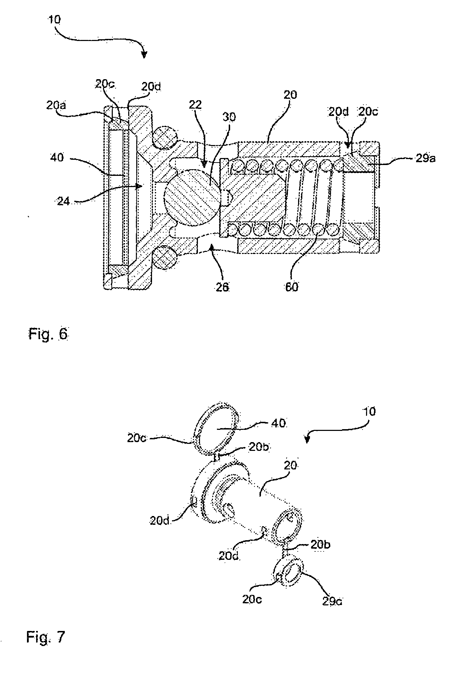

Die Figuren 6 und 7 zeigen eine weitere Ausführungsform eines erfindungsgemäßen Überdruckventils 10. Diese Ausführungsform basiert auf der Variante gemäß der Figuren 4 und 5. Jedoch sind hier am Formschlussabschnitt 20a Rastmittel 20c angeordnet, welche in der endmontierten Position gemäß Figur 6 in Gegenrastmittel 20d eingerastet sind. Damit erfolgt eine einfache und kostengünstige Durchführung der Endmontage.

Weiter ist bei der Ausführungsform der Figuren 6 und 7 eine Abstützvorrichtung 29a als Widerlager für die Federvorrichtung 60 und damit für die Dichtkraft vorgesehen. Auch diese Abstützvorrichtung 29a ist über einen Scharnierabschnitt 20d an dem Rest des Ventilkörpers 20 angelenkt. Beim Umklappen um diesen Scharnierabschnitt 20d erfolgt abschließend ein Einrasten von weiteren Rastmitteln 20c in Gegenrastmittel 20d am Ventilkörper 20. Auch dieser Montageschritt kann damit schnell und kostengünstig durchgeführt werden.

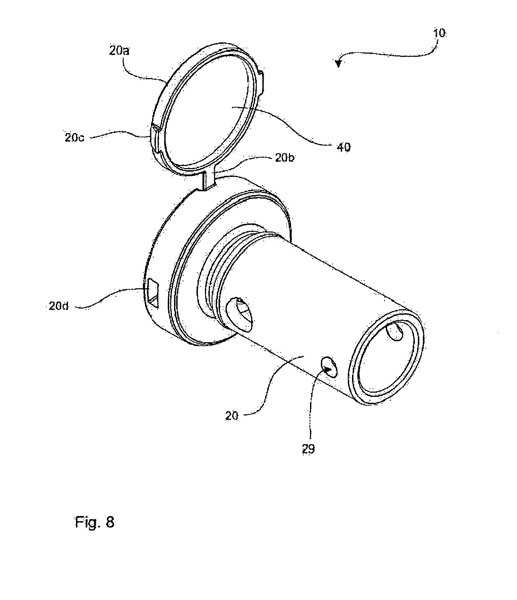

Die Figur 8 zeigt eine Variation der Ausführungsform der Figuren 6 und 7. So wurde hier anstelle der Abstützvorrichtung 29a eine Abstützaufnahme 29 vorgesehen. Dabei handelt es sich bei dieser Ausführungsform bei der Abstützaufnahme 29 um eine Öffnung im Ventilkörper 20, in welche eine Abstützvorrichtung 29a in Form eines Stiftes eingeschoben werden kann. Die Wirkung der Abstützvorrichtung 29 in Form eines Stiftes entspricht der Wirkung gemäß dem voranstehenden Absatz. So kann auch über einen solchen Stift eine Abstützung für die Dichtkraft zur Verfügung gestellt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Überdruckventil
- 20: Ventilgehäuse
- 20a: Formschlussabschnitt
- 20b: Scharnierabschnitt
- 20c: Rastmittel
- 20d: Gegenrastmittel
- 22: Innenraum
- 24: Fluideingang
- 26: Fluidausgang
- 28: Gehäusedichtfläche
- 29: Abstützaufnahme
- 29a: Abstützvorrichtung
- 30: Dichtelement
- 38: Elementdichtfläche
- 40: Filterelement
- 50: Spalt
- 60: Federvorrichtung

- 100: Türschließvorrichtung
- 110: Hydraulikvorrichtung
- 120: Tankraum
- 130: Druckraum
- 140: Fluidleitung

## Patentansprüche

1. Überdruckventil (10) für eine Türschließvorrichtung (100) einer Tür, aufweisend ein Ventilgehäuse (20) mit einem Innenraum (22), der einen Fluideingang (24) und einen Fluidausgang (26) aufweist, wobei der Innenraum (22) zwischen Fluideingang (24) und Fluidausgang (26) eine Gehäusedichtfläche (28) aufweist, weiter aufweisend ein Dichtelement (30) mit einer Elementdichtfläche (38), welche gemeinsam mit der Gehäusedichtfläche (28) einen Dichtsitz ausbildet, wobei das Dichtelement (30) in Richtung der Gehäusedichtfläche (28) mit einer Dichtkraft beaufschlagt ist, **dadurch gekennzeichnet, dass** der Fluideingang (24) durch ein Filterelement (40) abgedeckt ist, welches zumindest abschnittsweise formschlüssig an dem Ventilgehäuse (20) befestigt ist.

2. Überdruckventil (10) nach Anspruch 1, **dadurch gekennzeichnet, dass** das Ventilgehäuse (20) zumindest im Abschnitt der Gehäusedichtfläche (28) aus Kunststoff, insbesondere aus einem SpritzgussKunststoff, ausgebildet ist.

3. Überdruckventil (10) nach einem der vorangegangenen Ansprüche, **dadurch gekennzeichnet, dass** ein Formschlussabschnitt (20a) des Ventilgehäuses (20) das Filterelement (30) abschnittsweise umgibt, um das Filterelement (40) an dem Ventilgehäuse (20) zu befestigen.

4. Überdruckventil (10) nach einem der vorangegangenen Ansprüche, **dadurch gekennzeichnet, dass** die Kontaktflächen zwischen dem Filterelement (40) und dem Ventilgehäuse (20) wenigstens abschnittsweise abgedichtet sind.

5. Überdruckventil (10) nach einem der vorangegangenen Ansprüche, **dadurch gekennzeichnet, dass** das Filterelement (40) wenigstens eines der folgenden Materialien aufweist:
- Stoffgewebe
- Metallgewebe
- Sintermaterial
- Fliesmaterial

6. Überdruckventil (10) nach einem der vorangegangenen Ansprüche, **dadurch gekennzeichnet, dass** der Dichtsitz zwischen Gehäusedichtfläche (28) und Elementdichtfläche (38) ringförmig oder im Wesentlichen ringförmig ausgebildet ist.

7. Überdruckventil (10) nach einem der vorangegangenen Ansprüche, **dadurch gekennzeichnet, dass** zwischen dem Filterelement (40) und dem Dichtelement (30) bei ausgebildetem Dichtsitz ein Spalt (50) ausgebildet ist.

8. Überdruckventil (10) nach einem der vorangegangenen Ansprüche, **dadurch gekennzeichnet, dass** eine Federvorrichtung (60), insbesondere aufweisend wenigstens ein Federelement, vorgesehen ist, um das Dichtelement (30) mit der Dichtkraft in Richtung der Gehäusedichtfläche (28) zu beaufschlagen.

9. Überdruckventil (10) nach einem der vorangegangenen Ansprüche, **dadurch gekennzeichnet, dass** zwischen einem Formschlussabschnitt (20a) und dem Rest des Ventilgehäuses (20) ein Scharnierabschnitt (20b) angeordnet ist, um ein Verschwenken des Filterelements (40) zu ermöglichen.

10. Überdruckventil (10) nach Anspruch 9, **dadurch gekennzeichnet, dass** der Formschlussabschnitt (20a) wenigstens ein Rastmittel (20c) aufweist, welches ausgebildet ist für ein Einrasten in einem Gegenrastmittel (20d) des Ventilgehäuses (20).

11. Überdruckventil (10) nach einem der vorangegangenen Ansprüche, **dadurch gekennzeichnet, dass** im Ventilgehäuse (10) wenigstens eine Abstützaufnahme (29) für die Aufnahme einer Abstützvorrichtung (29a) für eine Abstützung der Dichtkraft angeordnet ist.

12. Überdruckventil (10) nach einem der vorangegangenen Ansprüche, **dadurch gekennzeichnet, dass** wenigstens eine Abstützvorrichtung (29a) für eine Abstützung der Dichtkraft mit wenigstens einem Rastmittel (20c) für ein Einrasten in einem Gegenrastmittel (20d) des Ventilkörpers (20) ausgebildet ist, welche Abstützvorrichtung (29a) insbesondere über einen Scharnierabschnitt (20b) mit dem Rest des Ventilgehäuses (20) verbunden ist.

13. Türschließvorrichtung (100) für eine Tür, aufweisend eine Hydraulikvorrichtung (110) mit einem Tankraum (120) und einem Druckraum (130), welche miteinander fluidkommunizierend über eine Fluidleitung (140) verbunden sind, **dadurch gekennzeichnet, dass** in der Fluidleitung (140) zumindest ein Überdruckventil (10) mit den Merkmalen eines der Ansprüche 1 bis 12 angeordnet ist.

14. Verfahren zur Herstellung eines Überdruckventils (10) mit den Merkmalen eines der Ansprüche 1 bis 12, aufweisend die folgenden Schritte:
- Herstellen des Ventilgehäuses (20),
- Zur Verfügung stellen eines Filterelements (40) und
- Zumindest abschnittsweises formschlüssiges Verbinden des Filterelements (40) mit dem Ventilgehäuse (20).

15. Verfahren nach Anspruch 14, **dadurch gekennzeichnet, dass** das Herstellen des Ventilgehäuses (20) und der Schritt des formschlüssigen Verbindens des Filterelements (40) mit dem Ventilgehäuse (20) mittels wenigstens eines Spritzgussvorgangs durchgeführt wird.
